(19) Europäisches Patentamt
European Patent Office
Office européen des brevets

(11) EP 4 489 043 A1

(12) EUROPEAN PATENT APPLICATION

(43) Date of publication:
08.01.2025 Bulletin 2025/02

(21) Application number: 24162852.8

(22) Date of filing: 12.03.2024

(51) International Patent Classification (IPC):
H01F 41/02 (2006.01)    H02K 21/12 (2006.01)

(52) Cooperative Patent Classification (CPC):
H01F 41/0273; H02K 1/27915; H02K 2213/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.07.2023 KR 20230086329

(71) Applicant: LG Electronics Inc.
Yeongdeungpo-gu
Seoul 07336 (KR)

(72) Inventors:
• JEONG, Gyujong
  08592 Seoul (KR)
• EUM, Sangjoon
  08592 Seoul (KR)
• PARK, Songe
  08592 Seoul (KR)
• CHO, Jeonghyun
  08592 Seoul (KR)
• HA, Kyungho
  08592 Seoul (KR)

(74) Representative: Vossius & Partner
Patentanwälte Rechtsanwälte mbB
Siebertstrasse 3
81675 München (DE)

(54) **MAGNET ORIENTATION DEVICE AND MAGNET**

(57) A magnet orientation device and a magnet are provided. The magnet orientation device according to an aspect of the present disclosure comprises an upper plate disposed on a magnet raw material formed into an arc shape that is convex upward, a lower plate disposed under the magnet raw material, and dies disposed on both sides of the magnet raw material, wherein the upper plate includes a first magnetic region and a first non-magnetic region surrounding the first magnetic region, the lower plate includes a second magnetic region and a second non-magnetic region surrounding the second magnetic region, a lower surface of the first magnetic region includes a plurality of grooves formed concave upward, an upper surface of the second magnetic region includes a plurality of protrusions formed convex upward, a horizontal length of the first magnetic region is greater than a horizontal length of the magnet raw material, and a horizontal length of the second magnetic region is equal to or less than the horizontal length of the magnet raw material.

FIG. 22

EP 4 489 043 A1

## Description

## BACKGROUND OF THE INVENTION

### Field of the Invention

The present disclosure relates to a magnet orientation device and a magnet, more specifically, to a magnet orientation device and a magnet for improving back electromotive force.

### Description of the Related Art

In general, washing machines include an outer tub containing wash water, and an inner tub rotatably provided in the outer tub to accommodate laundry cloth such as clothes, and washing and spin-drying of the laundry cloth are performed as the inner tub rotates.

The washing machines may be classified into a top loading type designed so that a rotation center of the inner tub is formed in a direction perpendicular to a floor and the laundry cloth can be inserted from a top, and a front loading type designed so that the rotation center of the inner tub is formed in a direction horizontal to the floor or is inclined to be lowered toward a back end, and the laundry cloth can be inserted from the front.

The top loading type washing machine can be largely classified into an agitator type and a pulsator type, and the agitator type does the laundry by rotating a laundry rod towering in the center of the inner tub, and the pulsator type does the laundry by rotating a disk-shaped pulsator formed in the lower part of the inner tub.

The front loading type is commonly referred to as a 'drum washing machine', and a lifter is provided on an inner circumferential surface of the inner tub, and as the drum rotates, the lifter lifts the laundry cloth and drops it to perform washing.

The washing machine is driven in two main operating modes (washing mode and spin-drying mode) with different operating conditions.

In order to satisfy both of the above two main operating modes, the washing machine is provided with a clutch, and operates an output shaft at low speed and high torque with a gear ratio of n: 1 (washing mode), or operates the output shaft at high speed and low torque with a gear ratio of 1:1 (spin-drying mode).

In this case, there is a structure that lowers power consumption and improves the operating efficiency of the motor by adding a planetary gear.

In general, washing machines are equipped with an outer rotor motor. In the outer rotor motor, a stator wound by coil is installed inside, and a rotor is arranged radially outside the stator, as if a magnet surrounds the coil of the stator. The rotor includes a plurality of magnets arranged radially.

Before becoming a magnet, electrons in a typical magnetic material are randomly arranged. In order to magnetize such a magnetic material, a permanent magnet can be formed by first orienting the electron array within the magnetic material in a certain direction and then going through a magnetization process to magnetically polarize it by applying an external magnetic field.

A magnet having a plurality of polar regions has a plurality of magnetic center lines. In this case, there were problems with the motor output decreasing and noise increasing since the plurality of magnetic center lines were formed in an asymmetric shape due to the magnetic division region connecting the plurality of polar regions and the physical division region at both ends of the magnet.

[Prior technical literature]

[Patent document]

Related Art 1: Korean Patent Publication No. KR10-2020-0089604

## SUMMARY OF THE INVENTION

A problem to be solved by the present disclosure is to provide a magnet orientation device that can symmetrically orient a magnetic center line of a magnet having a plurality of polar regions.

In addition, a problem to be solved by the present disclosure is to provide a magnet orientation device and a magnet that can improve the output of the motor and reduce noise.

A magnet orientation device according to one aspect of the present disclosure for achieving the above object may comprise an upper plate disposed on a magnet raw material formed into an arc shape that is convex upward, a lower plate disposed under the magnet raw material, and dies disposed on both sides of the magnet raw material.

In this case, the upper plate may include a first magnetic region and a first non-magnetic region surrounding the first magnetic region, and the lower plate may include a second magnetic region and a second non-magnetic region surrounding the second magnetic region.

In addition, a lower surface of the first magnetic region may include a plurality of grooves formed concave upward, an upper surface of the second magnetic region may include a plurality of protrusions formed convex upward, a horizontal length of the first magnetic region may be greater than a horizontal length of the magnet raw material, and a horizontal length of the second magnetic region may be equal to or less than the horizontal length of the magnet raw material.

Through this, it is possible to improve the output of the motor and reduce noise by orienting symmetrically the magnetic center line of the magnet having a plurality of polar regions.

In addition, a difference between the horizontal length of the magnet raw material and the horizontal length of the second magnetic material region may be 0 or more and 2 mm or less. Preferably, the horizontal length of the magnet raw material and the horizontal length of the second magnetic material region may be the same.

In addition, a difference between the horizontal length of the first magnetic region and the horizontal length of the magnet raw material may be 0.2 mm or more and 0.5 mm or less.

Through this, it is possible to improve efficiency in which the magnetic center line of the magnet having a plurality of polar regions can be oriented symmetrically.

In addition, the first non-magnetic region may protrude downward from a center to both sides, and the second non-magnetic region may protrude upward from the both sides to the center.

In addition, each of the plurality of grooves and the plurality of protrusions may be formed as a curve.

A magnet orientation device according to one aspect of the present disclosure for achieving the above object may comprise an upper plate disposed on a magnet raw material formed into an arc shape that is convex upward, a lower plate disposed under the magnet raw material, and dies disposed on both sides of the magnet raw material.

In this case, the upper plate may include a first magnetic region and a first non-magnetic region surrounding the first magnetic region, and the lower plate may include a second magnetic region and a second non-magnetic region surrounding the second magnetic region.

In addition, a lower surface of the first magnetic region may include a plurality of grooves formed concave upward, an upper surface of the second magnetic region may include a plurality of protrusions formed convex upward, each of the plurality of grooves and the plurality of protrusions may be formed as a curve, among the plurality of grooves, a shape of the groove adjacent to both sides of the first magnetic region may be different from a shape of the other grooves, and among the plurality of protrusions, a shape of the protrusions adjacent to both sides of the second magnetic material region may be different from a shape of the other protrusions.

In addition, among the plurality of grooves, the groove adjacent to the both sides of the first magnetic region may have a plurality of curvatures, and the other grooves may have a single curvature.

In this case, among the grooves adjacent to the both sides of the first magnetic region among the plurality of grooves, regions adjacent to the both sides of the first magnetic region may have a first curvature, and the other regions may have a second curvature, and among the plurality of grooves, grooves other than the grooves adjacent to the both sides of the first magnetic region may have a second curvature.

Preferably, a size of the first curvature may be greater than a size of the second curvature.

More preferably, a value obtained by dividing the first curvature by the second curvature may be between 1 and 1.2.

Through this, it is possible to improve the output of the motor and reduce noise by orienting symmetrically the magnetic center line of the magnet having a plurality of polar regions.

In addition, among the plurality of protrusions, protrusions adjacent to the both sides of the second magnetic region may have a plurality of curvatures, and the other protrusions may have a single curvature.

In this case, among the plurality of protrusions, regions adjacent to the both sides of the second magnetic region of the protrusions adjacent to the both sides of the second magnetic region may have a third curvature, and the other regions may have a fourth curvature, and among the plurality of protrusions, protrusions other than the protrusions adjacent to the both sides of the second magnetic region may have a fourth curvature.

Preferably, a size of the third curvature may be greater than a size of the fourth curvature.

More preferably, a value obtained by dividing the third curvature by the fourth curvature may be between 1 and 1.25.

Through this, it is possible to improve the output of the motor and reduce noise by orienting symmetrically the magnetic center line of the magnet having a plurality of polar regions.

In addition, the first non-magnetic region may protrude downward from the center to the both sides, and the second non-magnetic region may protrude upward from the both sides to the center.

In addition, a horizontal length of the first magnetic region may be greater than a horizontal length of the magnet raw material.

In addition, a horizontal length of the second magnetic region may be equal to or less than a horizontal length of the magnet raw material.

A magnet according to one aspect of the present disclosure for achieving the above object may be manufactured using a magnet orientation device according to one aspect of the present disclosure.

Through the present disclosure, it is possible to provide a magnet orientation device that can symmetrically orient the magnetic center line of the magnet having a plurality of polar regions.

In addition, through the present disclosure, it is possible to provide a magnet orientation device and a magnet that can improve the output of the motor and reduce noise.

## BRIEF DESCRIPTION OF THE DRAWINGS

FIGS. 1 and 2 are perspective views of a washing machine according to an embodiment of the present disclosure.

FIG. 3 is a perspective view of a washing machine driving system according to an embodiment of the present disclosure.

FIG. 4 is an exploded perspective view of a washing machine driving system according to an embodiment of the present disclosure.

FIG. 5 is an exploded perspective view of a washing machine driving system according to another embodiment of the present disclosure.

FIG. 6 is a plan view of a rotor according to an embodiment of the present disclosure.

FIGS. 7 to 10 are plan views of a magnet according to an embodiment of the present disclosure.

FIG. 11 is a plan view of a rotor according to an embodiment of the present disclosure. FIG. 12 is an enlarged view of portion A of FIG. 11.

FIG. 13 is a plan view of a polar region according to an embodiment of the present disclosure.

FIG. 14 is a graph showing a rate of increase in back electromotive force of a motor with respect to a polar anisotropy coefficient of a magnet according to an embodiment of the present disclosure.

FIG. 15 is a graph showing a rate of change of material cost of a stator unit with respect to a polar anisotropy coefficient of a magnet according to an embodiment of the present disclosure.

FIG. 16 is a graph showing a manufacturing cost ratio of a rotor with respect to the number of polar region in one magnet according to an embodiment of the present disclosure.

FIG. 17 is a graph showing a rate of change of material cost of a motor with respect to a polar anisotropy coefficient of a magnet according to an embodiment of the present disclosure.

FIG. 18 is a graph showing a rate of increase in back electromotive force of a motor with respect to a polar anisotropy coefficient of a magnet according to an embodiment of the present disclosure.

FIGS. 19 and 20 are diagrams showing a plurality of magnetic center lines of a magnet according to an embodiment of the present disclosure.

FIG. 21 is a graph showing a cogging torque of a motor depending on relationship between a plurality of magnetic center lines of a magnet according to an embodiment of the present disclosure.

FIG. 22 is a cross-sectional view of a magnet orientation device and a magnet raw material according to an embodiment of the present disclosure.

FIG. 23 is a diagram showing magnetic field analysis of a magnetic region and a magnet raw material of a magnet orientation device according to an embodiment of the present disclosure.

FIG. 24 is a graph showing a cogging torque of a motor depending on relationship between horizontal lengths of an upper plate, a lower plate, and a magnet raw material of a magnet orientation device according to an embodiment of the present disclosure.

FIG. 25 is a cross-sectional view of a magnetic region and a magnet raw material of a magnet orientation device according to an embodiment of the present disclosure.

FIG. 26 is a graph showing a cogging torque of a motor depending on relationship between radii of curvature of a plurality of grooves of an upper plate of a magnet orientation device according to an embodiment of the present disclosure.

FIG. 27 is a graph showing a cogging torque of a motor depending on relationship between radii of curvature of a plurality of protrusions of a lower plate of a magnet orientation device according to an embodiment of the present disclosure.

## DETAILED DESCRIPTION OF THE EMBODIMENTS

Hereinafter, embodiments disclosed in the present disclosure will be described in detail with reference to the accompanying drawings, however, regardless of the reference numerals, the same or similar components will be given the same reference numerals and redundant description thereof will be omitted.

In describing the embodiments disclosed in the present disclosure, when a component is referred to as being "connected" or "accessed" to other component, it may be directly connected or accessed to the other component, however, it may be understood that other components may be present in the middle.

In addition, in describing the embodiments disclosed in the present disclosure, when it is determined that the detailed description of the related known technology may obscure the subject matter of the embodiments disclosed in the present disclosure, the detailed description thereof will be omitted. In addition, the accompanying drawings are only for easily understanding the embodiments disclosed in the present disclosure, the technical scope disclosed in the present disclosure is not limited by the accompanying drawings, and it should be understood that the accompanying drawings include all changes, and substitutes included in the scope of the present disclosure.

On the other hand, terms of disclosure may be replaced with terms such as document, specification, description.

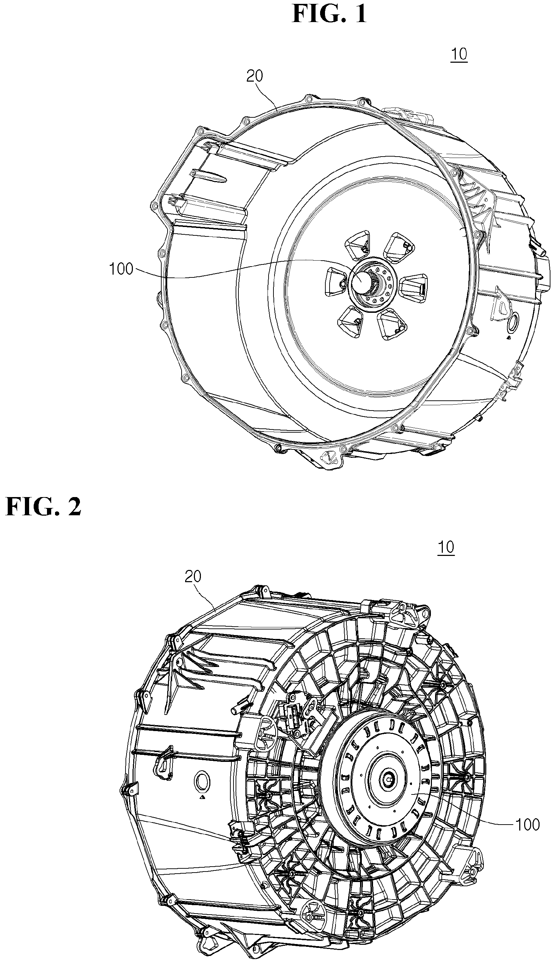

FIGS. 1 and 2 are perspective views of a washing machine according to an embodiment of the present disclosure.

Referring to FIGS. 1 and 2, a washing machine 10 according to an embodiment of the present disclosure may include an outer tub 20 and a washing machine driving system 100, but may be implemented excluding some of these configurations, and additional configurations other than these are not excluded.

The washing machine 10 according to an embodiment of the present disclosure will be described using a front loading type designed so that a rotation center of an inner tub is formed in a direction horizontal to the floor or is inclined to be lowered toward a back end, and the laundry cloth can be inserted from the front as an example, but the detailed configuration of the washing machine driving system 100 can also be applied to a top loading type washing machine.

The outer tub 20 may have a cylindrical shape with the top or front open. An inner tub (not shown) may be placed inside the outer tub 20. The outer tub 20 may be made of plastic material. The inner tub may be connected to an output shaft 110 of the washing machine driving system 100. The washing machine driving system 100 is coupled to the inner tub of the washing machine 10 and can rotate the inner tub.

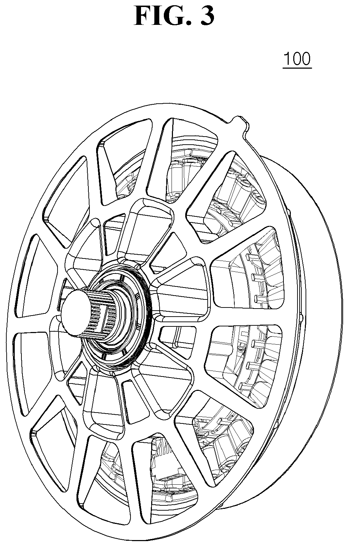

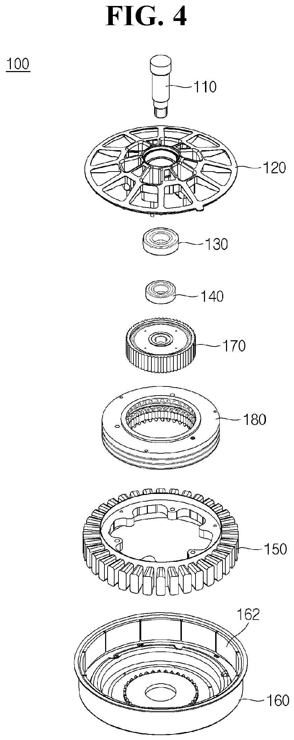

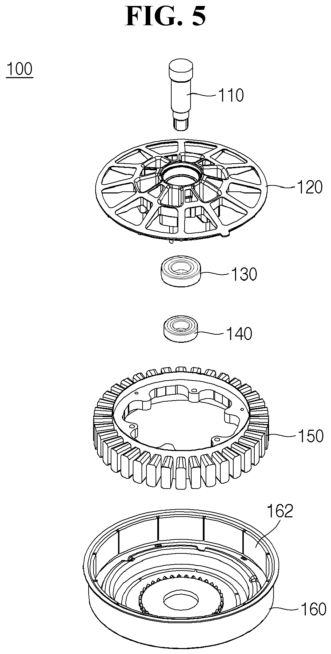

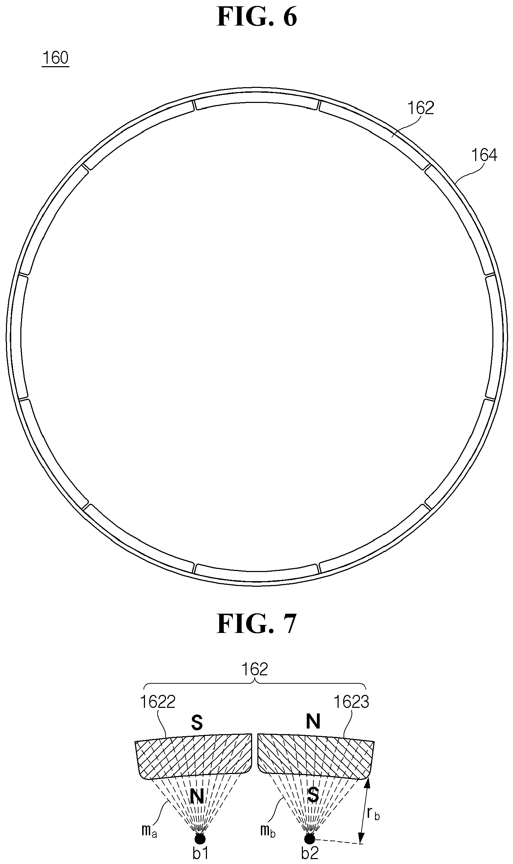

FIG. 3 is a perspective view of a washing machine driving system according to an embodiment of the present disclosure. FIG. 4 is an exploded perspective view of a washing machine driving system according to an embodiment of the present disclosure. FIG. 5 is an exploded perspective view of a washing machine driving system according to another embodiment of the present disclosure. FIG. 6 is a plan view of a rotor according to an embodiment of the present disclosure.

Referring to FIGS. 3, 4, and 6, a washing machine driving system 100 according to an embodiment of the present disclosure may include an output shaft 110, a housing 120, a first bearing 130, a second bearing 140, a stator 150, a rotor 160, a planetary gear set 170, and a clutch 180, but may be implemented excluding some of these configurations, and additional configurations other than these are not excluded.

As shown in FIG. 5, the washing machine driving system 100 may be implemented excluding the planetary gear set 170 and the clutch 180.

The output shaft 110 may extend in an axial direction. The output shaft 110 may be coupled to the inner tub. The output shaft 110 may be rotatably coupled to the housing 120. The output shaft 110 may be bearing-coupled to the housing 120. The output shaft 110 may be coupled to the planetary gear set 170.

The inner tub may be coupled to an upper region of the output shaft 110. A central region of the output shaft 110 may be bearing-coupled to the housing 120. The first bearing 130 and the second bearing 140 may be disposed between the central region of the output shaft 110 and the housing 120.

A lower region of the output shaft 110 may be disposed within the rotor 160. The lower region of the output shaft 110 may be coupled to the planetary gear set 170. A diameter of the lower region of the output shaft 110 may be smaller than a diameter of the central region. An axial length of the lower region of the output shaft 110 may be shorter than an axial length of the central region of the output shaft 110.

The output shaft 110 may be rotatably coupled to the housing 120. The inner tub and the outer tub 20 may be disposed on an upper part of the housing 120. The housing 120 may be coupled to the outer tub 20. The stator 150, the rotor 160, the planetary gear set 170, and the clutch 180 may be disposed in the lower part of the housing 120. The housing 120 may be coupled to the stator 150. The housing 120 may be made of plastic material.

The first bearing 130 may be disposed between the output shaft 110 and the housing 120. The first bearing 130 may bearing-couple the output shaft 110 to the housing 120. The first bearing 130 may rotatably couple the output shaft 110 to the housing 120. The first bearing 130 may extend in the circumferential direction. The first bearing 130 may be disposed on the second bearing 140.

The second bearing 140 may be disposed between the output shaft 110 and the housing 120. The second bearing 140 may bearing-couple the output shaft 110 to the housing 120. The second bearing 140 may rotatably couple the output shaft 110 to the housing 120. The second bearing 140 may extend in the circumferential direction. The second bearing 140 may be disposed below the first bearing 130. The second bearing 140 may be disposed on the planetary gear set 170. The second bearing 140 may be disposed radially inside the stator 150.

The stator 150 may be coupled to the housing 120. The stator 150 may be disposed inside the rotor 160. The stator 150 may face the rotor 160. The stator 150 may be disposed on the clutch 180. The stator 150 may include a coupling portion coupled to the housing 120, a stator unit disposed radially outside the coupling portion, and a coil wound around the stator unit. The stator 150 may rotate the rotor 160 through electromagnetic interaction.

The rotor 160 may face the stator 150. The rotor 160 may be coupled to the planetary gear set 170. Through this, the rotor 160 may supply rotational force to the output shaft 110.

The rotor 160 may include a rotor core 164 disposed on the radial outer side of the stator 150, and a magnet 162 disposed on the inner surface of the rotor core 164. The magnet 162 may face the stator 150. The magnet 162 may face the stator unit of the stator 150. When current is supplied to the coil of the stator 150, the magnet 162 may rotate in one direction or the other direction due to electromagnetic interaction.

The magnet 162 may include a plurality of magnets spaced apart in the circumferential direction. The plurality of magnets may be disposed radially with respect to a central region of the rotor core 164. Each of the plurality of magnets may face a plurality of stator units spaced apart in the circumferential direction.

The stator 150 and the rotor 160 may be referred to as a 'motor'.

The planetary gear set 170 may be spline-coupled to an outer circumferential surface of the output shaft 110. The planetary gear set 170 may be coupled to the rotor 160. The planetary gear set 170 may rotate integrally with the rotor 160. The planetary gear set 170 may transmit the rotational force of the rotor 160 to the output shaft 110.

For example, the planetary gear set 170 may transmit the rotational force of the rotor 160 to the output shaft 110 by reducing the speed at a gear ratio of 1:1 or n:1, or the rotational force of the rotor 160 to the output shaft 110 at a gear ratio of 1:1. Through this, the washing mode and spin-drying mode can be implemented without stopping between the end of washing and the start of spin-drying.

The clutch 180 may be disposed between the motors 150 and 160 and the planetary gear set 170. A portion of the clutch 180 may be spline-coupled to the planetary gear set 170, and another portion may be coupled to the stator 150. The clutch 180 may fix or unfix some components of the planetary gear set 170. Through this, the clutch 180 may allow the planetary gear set 170 to transmit the rotational force of the rotor 160 to the output shaft 110 at the gear ratio of 1:1, or the planetary gear set 170 to transmit the rotational force of the rotor 160 to the output shaft 110 by reducing the speed at the gear ratio of 1:1.

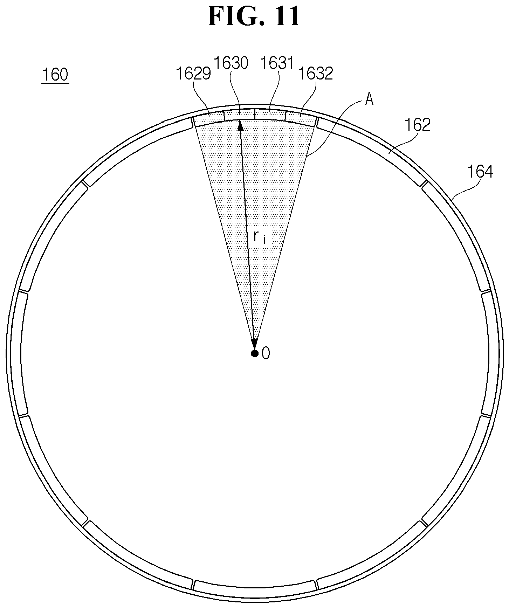

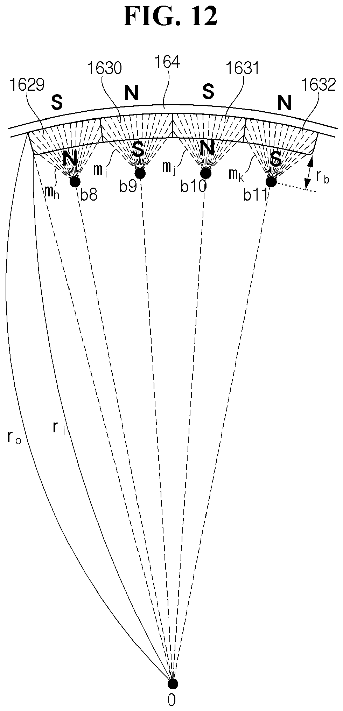

FIGS. 7 to 10 are plan views of a magnet according to an embodiment of the present disclosure. FIG. 11 is a plan view of a rotor according to an embodiment of the present disclosure. FIG. 12 is an enlarged view of portion A of FIG. 11.

The magnet 162 according to an embodiment of the present disclosure may also be applied to the washing machine 10 driven without the planetary gear set 170 and the clutch 180, as shown in FIG. 5.

Referring to FIG. 7, the magnet 162 may include single polar regions 1622 and 1623. The single polar regions 1622 and 1623 may be spaced apart in the circumferential direction. The single polar regions 1622 and 1623 may be arranged side by side in the circumferential direction. The single polar regions 1622 and 1623 disposed adjacent to each other may have different polarities. For example, an inner surface of a first polar region 1622 may have an N pole, and an inner surface of a second polar region 1623, which is spaced apart from the first polar region 1622 in the circumferential direction, may have an S pole.

The single polar regions 1622 and 1623 may be formed overall into an arc shape. The adjacent single polar regions 1622 and 1623 may have an each magnetic focus centers b1 and b2 that are different from a center O of an inner diameter r-i of the single polar regions 1622 and 1623. For example, a first magnetic focus center b1 may be a focus center of a first magnetic orientation (ma) of the first polar region 1622, and a second magnetic focus center b2 may be a focus center of a second magnetic orientation (mb) of the second polar region 1623. Distances (rb) between the magnetic focus centers b1 and b2 of adjacent single polar regions 1622 and 1623 and the single polar regions 1622 and 1623 may be equal to each other.

In one embodiment of the present disclosure, a case where the magnet 162 is formed of the single polar regions 1622 and 1623 may be defined as a 'one-pole magnet'.

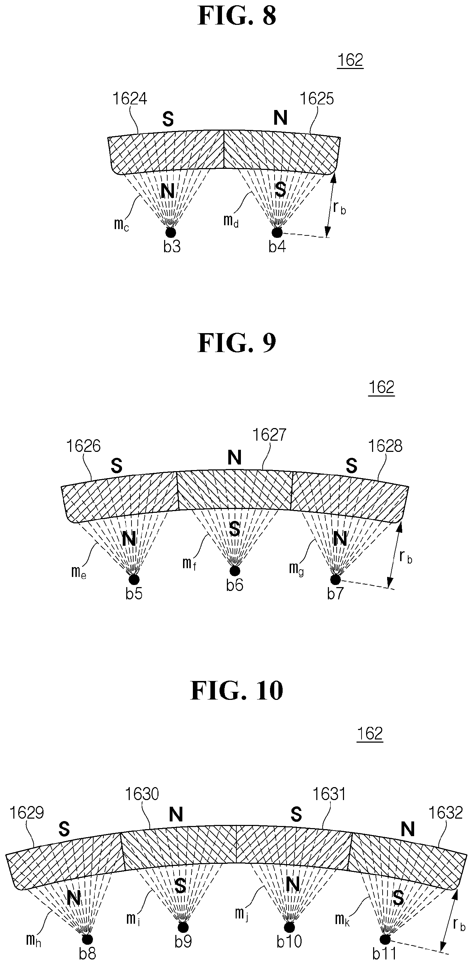

Referring to FIG. 8, the magnet 162 may include two polar regions 1624 and 1625. The two polar regions 1624 and 1625 may be arranged side by side in the circumferential direction. The two polar regions 1624 and 1625 may have different polarities. For example, an inner surface of the third polar region 1624 may have an N pole, and an inner surface of the fourth polar region 1625 may have an S pole.

The two polar regions 1624 and 1625 may be formed overall into an arc shape. The adjacent two polar regions 1624 and 1625 may have an each magnetic focus centers b3 and b4 that are different from a center O of an inner diameter r-i of the two polar regions 1624 and 1625. For example, a third magnetic focus center b3 may be a focus center of a third magnetic orientation (me) of the third polar region 1624, and a fourth magnetic focus center b4 may be a focus center of a fourth magnetic orientation (md) of the fourth polar region 1625. Distances rb between the magnetic focus centers b3 and b4 of the two polar regions 1624 and 1625 and the two polar regions 1624 and 1625 may be equal to each other.

In one embodiment of the present disclosure, a case where the magnet 162 is formed of the two polar regions 1624 and 1625 may be defined as a 'two-pole magnet'.

Referring to FIG. 9, the magnet 162 may include three polar regions 1626, 1627, and 1628. The three polar regions 1626, 1627, and 1628 may be arranged side by side in the circumferential direction. The three polar regions 1626, 1627, and 1628 may have different polarities. For example, an inner surface of the fifth polar region 1626 may have an N pole, and an inner surface of the sixth polar region 1627 may have an S pole, and an inner surface of the seventh polar region 1628 may have an N pole.

The three polar regions 1626, 1627, and 1628 may be formed overall into an arc shape. The adjacent three polar regions 1626, 1627, and 1628 may have an each magnetic focus centers b5, b6, and b7 that are different from a center O of an inner diameter r-i of the three polar regions 1626, 1627, and 1628. For example, a fifth magnetic focus center b5 may be a focus center of a fifth magnetic orientation (me) of the fifth polar region 1626, a sixth magnetic focus center b6 may be a focus center of a sixth magnetic orientation (mf) of the sixth polar region 1627, and a seventh magnetic focus center b7 may be a focus center of a seventh magnetic orientation (mg) of the seventh polar region 1628. Distances rb between the magnetic focus centers b5, b6, and b7 of the three polar regions 1626, 1627, and 1628 and the three polar regions 1626, 1627, and 1628 may be equal to each other. The circumferential distances between the magnetic focus centers b5, b6, and b7 of the three polar regions 1626, 1627, and 1628 and adjacent magnetic focus centers may be equal to each other.

In one embodiment of the present disclosure, a case where the magnet 162 is formed of the three polar regions 1626, 1627, and 1628 may be defined as a 'three-pole magnet'.

Referring to FIGS. 10 to 12, the magnet 162 may include four polar regions 1629, 1630, 1631, and 1632. The four polar regions 1629, 1630, 1631, and 1632 may be arranged side by side in the circumferential direction. The four polar regions 1629, 1630, 1631, and 1632 may have different polarities. For example, an inner surface of the eighth polar region 1629 may have an N pole, and an inner surface of the ninth polar region 1630 may have an S pole, an inner surface of the 10th polar region 1631 may have an N pole, an inner surface of the 11th polar region 1632 may have an S pole. The four polar regions 1629, 1630, 1631, and 1632 may be formed overall into an arc shape.

The adjacent four polar regions 1629, 1630, 1631, and 1632 may have an each magnetic focus centers b8, b9, b 10, and b11 that are different from a center O of an inner diameter r-i of the four polar regions 1629, 1630, 1631, and 1632. For example, an eighth magnetic focus center b8 may be a focus center of an eighth magnetic orientation (mh) of the eighth polar region 1629, a ninth magnetic focus center b9 may be a focus center of a ninth magnetic orientation (mi) of the ninth polar region 1630, a tenth magnetic focus center b10 may be a focus center of a tenth magnetic orientation (mj) of the tenth polar region 1631, and an 11th magnetic focus center b11 may be a focus center of an 11th magnetic orientation (mk) of the 11th polar region 1632.

In this case, the distances rb between the magnetic focus centers b8, b9, b 10, and b11 of the four polar regions 1629, 1630, 1631, and 1632 and the four polar regions 11629, 1630, 1631, and 1632 may be equal to each other. The circumferential distances between the magnetic focus centers b8, b9, b10, and b11 of the four polar regions 1629, 1630, 1631, and 1632 and adjacent magnetic focusing centers may be equal to each other.

In one embodiment of the present disclosure, a case where the magnet 162 is formed of the four polar regions 1629, 1630, 1631, and 1632 may be defined as a 'four -pole magnet'.

In one embodiment of the present disclosure, when the number of the at least one polar region 1622 ad 1623 is 1, the number of the plurality of magnets spaced apart in the circumferential direction may be 48, when the number of the at least one polar region 1624 and 1625 is 2, the number of the plurality of magnets spaced apart in the circumferential direction may be 24, when the number of at least one polar region 1626, 1627, and 1628 is 3, the number of the plurality of magnets magnets spaced apart in the circumferential direction may be 24, and when the number of the at least one polar region 1629, 1630, 1631, and 1632 is 4, the number of the plurality of magnets spaced apart in the circumferential direction may be 12. Through this, it is possible to improve the space efficiency of the motors 150 and 160 applied to the washing machine 10.

In one embodiment of the present disclosure, it has been described as an example that the number of the at least one polar region 1622, 1623, 1624, 1625, 1626, 1627, 1628, 1629, 1630, 1631, and 1632 is 1 to 4, but cases of 5 or more are not excluded.

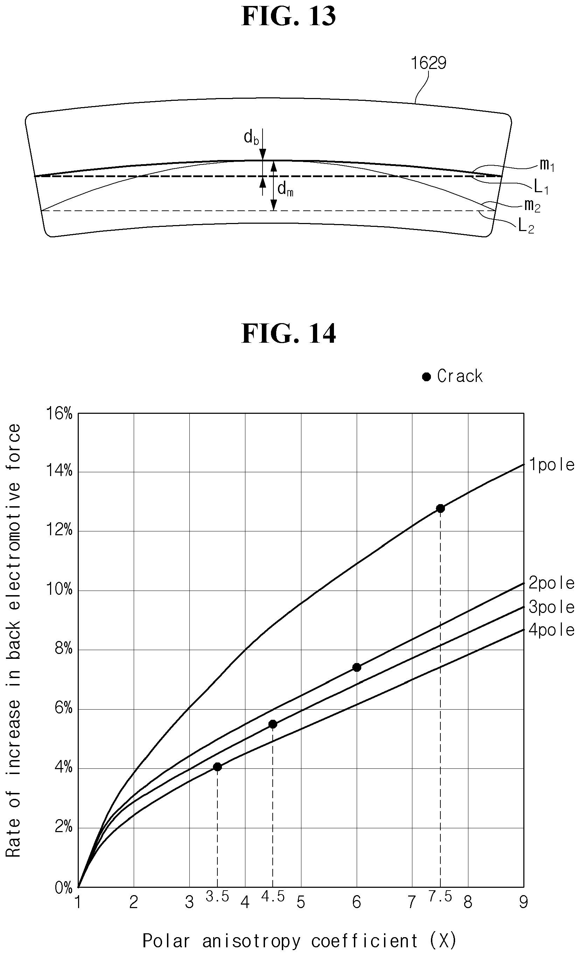

FIG. 13 is a plan view of a polar region according to an embodiment of the present disclosure.

The polar anisotropy coefficient (X) will be described with reference to FIG. 13.

dm means a distance from a straight line (L2) connecting both ends of a magnetic center line (m2) of the at least one polar region (1622, 1623, 1624, 1625, 1626, 1627, 1628, 1629, 1630, 1631, 1632) to a central region of the magnetic center line (m2) of the at least one polar region (1622, 1623, 1624, 1625, 1626, 1627, 1628, 1629, 1630, 1631, 1632).

db means a distance from a straight line (L1) connecting both ends of a magnetic center line (m1) of the at least one polar region (1622, 1623, 1624, 1625, 1626, 1627, 1628, 1629, 1630, 1631, 1632) to a central region of the magnetic center line (m1) of the at least one polar region (1622, 1623, 1624, 1625, 1626, 1627, 1628, 1629, 1630, 1631, 1632) when the at least one polar region (1622, 1623, 1624, 1625, 1626, 1627, 1628, 1629, 1630, 1631, 1632) has a magnetic focus center equal to the center (O) of the inner diameter (ri) of the at least one polar region (1622, 1623, 1624, 1625, 1626, 1627, 1628, 1629, 1630, 1631, 1632).

In FIG. 13, dm and db are explained based on vertical lines spaced left and right, but this is only an illustration to aid understanding, in reality, dm and db may be interpreted to mean lengths based on vertical lines that overlap each other.

Here, db may satisfy Equation 1.

[Equation 1]

$$d_b = \frac{r_i + r_o}{2} - \sqrt{\left(\frac{r_i + r_o}{2}\right)^2 - \left(\frac{r_o - r_i}{2p}\right)^2}$$

Where, $r_i$ may mean an inner radius of the at least one polar region (1622, 1623, 1624, 1625, 1626, 1627, 1628, 1629, 1630, 1631, 1632), $r_o$ may mean an outer radius of the at least one polar region(1622, 1623, 1624, 1625, 1626, 1627, 1628, 1629, 1630, 1631, 1632), and p may mean the number of the at least one polar region(1622, 1623, 1624, 1625, 1626, 1627, 1628, 1629, 1630, 1631, 1632).

The polar anisotropy coefficient (X) is a coefficient that determines how close the magnetic focus center of the at least one polar region (1622, 1623, 1624, 1625, 1626, 1627, 1628, 1629, 1630, 1631, 1632) is located to the at least one polar region(1622, 1623, 1624, 1625, 1626, 1627, 1628, 1629, 1630, 1631, 1632), and may satisfy Equation 2 below.

[Equation 2]

$$X = \frac{d_m}{d_b}$$

FIG. 14 is a graph showing a rate of increase in back electromotive force of a motor with respect to a polar anisotropy coefficient of a magnet according to an embodiment of the present disclosure.

Referring to FIG. 14, it can be seen the rate of increase in back electromotive force with respect to the polar anisotropy coefficient (X) of the magnet 162. As the polar anisotropy coefficient (X) of the magnet 162 increases, the rate of increase in back electromotive force of the motors 150 and 160 increases. Here, the rate of increase in back electromotive force refers to a ratio of the back electromotive force when the polar anisotropy coefficient changes compared to the back electromotive force when the polar anisotropy coefficient (X) is 1. The closer the magnetic focus center (b1, b2, b3, b4, b5, b6, b7, b8, b9, b10, b11) of the at least one polar region (1622, 1623, 1624, 1625, 1626, 1627, 1628, 1629, 1630, 1631, 1632) approaches the at least one polar polar region (1622, 1623, 1624, 1625, 1626, 1627, 1628, 1629, 1630, 1631, 1632), the higher the polar anisotropy coefficient (X) may be.

As the polar anisotropy coefficient (X) increases, the orientation lines (electron arrangement of magnetic material) converge toward the circumferential center of the polar region, since the rigidity of both ends in the circumferential direction of the polar region weakens, cracks may occur in the magnet 162. That is, when the polar anisotropy coefficient (X) continues to increase, cracks may occur in the magnet 162.

Specifically, if the magnet 162 is a 1-pole magnet, cracks may occur in the magnet 162 when the polar anisotropy coefficient (X) reaches 7.5, if the magnet 162 is a 2-pole magnet, cracks may occur in the magnet 162 when the polar anisotropy coefficient (X) reaches 6, if the magnet 162 is a 3-pole magnet, cracks may occur in the magnet 162 when the polar anisotropy coefficient (X) reaches 4.5, and if the magnet 162 is a 4-pole magnet, cracks may occur in the magnet 162 when the polar anisotropy coefficient (X) reaches 3.5.

Therefore, when the number of the at least one polar region 1622 or 1623 of the magnet 162 is 1, it is preferable that the polar anisotropy coefficient (X) is less than 7.5, when the number of the at least one of the polar regions 1624 and 1625 is 2, it is preferable that the polar anisotropy coefficient (X) is less than 6, when the number of the at least one polar regions 1626, 1627, and 1628 is 3, it is preferable that the polar anisotropy coefficient (X) is less than 4.5, and when the number of the at least four polar regions 1629, 1630, 1631, and 1632 is 4, it is preferable that the polar anisotropy coefficient (X) is less than 3.5.

Through this, it is possible to prevent damage to the product by reducing the possibility of cracks occurring in the magnet 162 while increasing the back electromotive force of the motors 150 and 160.

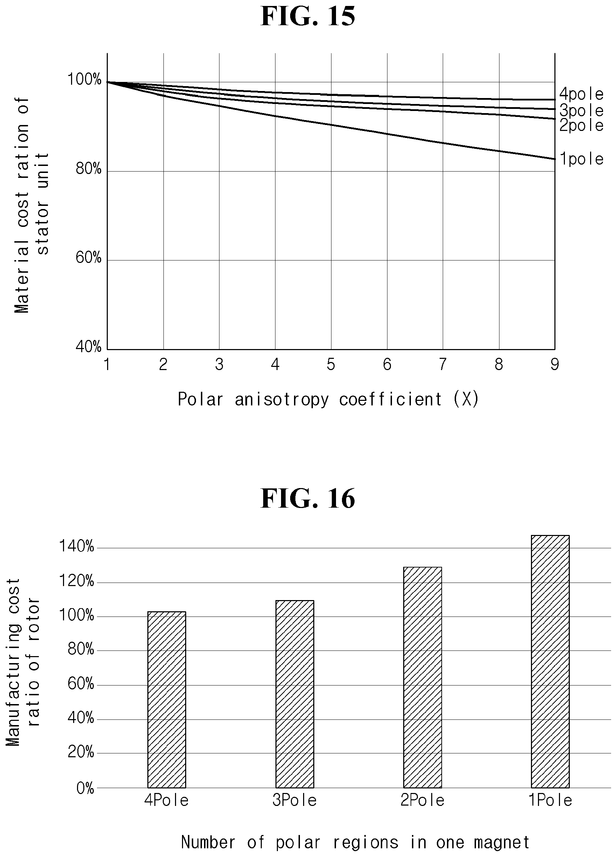

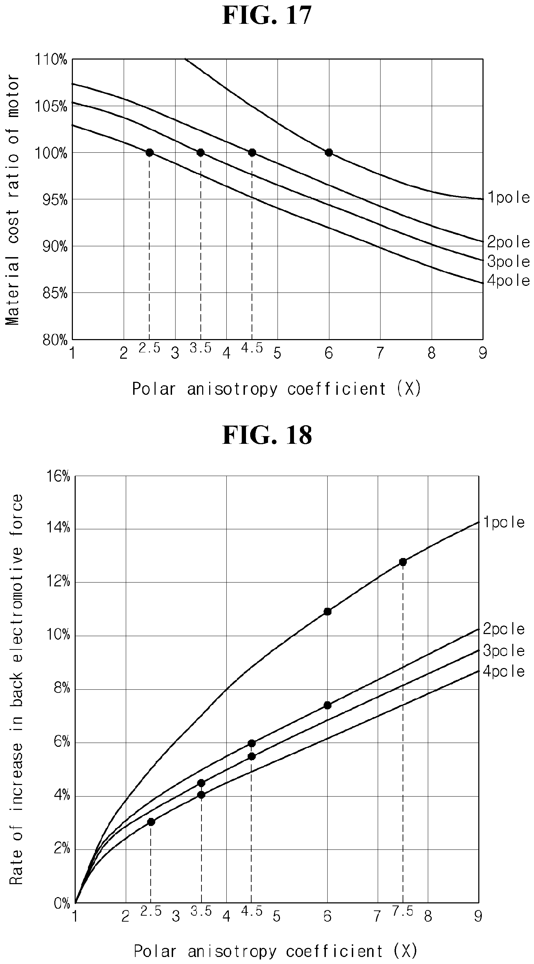

FIG. 15 is a graph showing a rate of change of material cost of a stator unit with respect to a polar anisotropy coefficient of a magnet according to an embodiment of the present disclosure. FIG. 16 is a graph showing a rate of change of manufacturing cost of a rotor with respect to the number of polar region in one magnet according to an embodiment of the present disclosure. FIG. 17 is a graph showing a rate of change of material cost of a motor with respect to a polar anisotropy coefficient of a magnet according to an embodiment of the present disclosure. FIG. 18 is a graph showing a rate of increase in back electromotive force of a motor with respect to a polar anisotropy coefficient of a magnet according to an embodiment of the present disclosure.

In FIG. 14, it was confirmed that as the polar anisotropy coefficient (X) increases, the back electromotive force of the motors 150 and 160 increases. In general, as a stacking height of the stator core in the core of the same rotor 160 decreases, the back electromotive force of the motor decreases.

When increasing the polar anisotropy coefficient (X) to 1 or more, it can be set to a level equivalent to the back electromotive force when the polar anisotropy coefficient (X) is set to 1 by reducing the stacking height of the stator core. In other words, when the polar anisotropy coefficient (X) is set to 1 or more, it has an effect of reducing the material cost of the stator unit by reducing the stacking height of the stator core.

Referring to FIG. 15, can be seen that the change rate of the material cost of the stator unit of the motors 150 and 160 according to the polar anisotropy coefficient (X) of the motors 150 and 160. As the polar anisotropy coefficient (X) increases, the back electromotive force of the motors 150 and 160 increases, and it can be seen that the material cost of the stator unit is reduced because stacking of the stator units of the motors 150 and 160 can be reduced. Here, the material cost ratio of the stator unit refers to a stator unit material cost ratio when the polar anisotropy coefficient (X) changes compared to the stator unit material cost when the polar anisotropy coefficient (X) is set to 1.

Referring to FIG. 16, it can be seen that the manufacturing cost ratio of the rotor 160 to the number of polar regions (1622, 1623, 1624, 1625, 1626, 1627, 1628, 1629, 1630, 1631, 1632) in one magnet. Here, the manufacturing cost ratio of the rotor 160 refers to the manufacturing cost of the rotor when the number of polar regions in one magnet 162 is less than 6 compared to the manufacturing cost of the rotor 160 when one magnet 162 consists of 6 polar regions.

Even if the number of polar regions (1622, 1623, 1624, 1625, 1626, 1627, 1628, 1629, 1630, 1631, 1632) of one magnet 162 changes in the rotor 160 of the same size, the overall mass of the magnets 162 in the rotor 160 does not change significantly.

However, as the number of polar regions (1622, 1623, 1624, 1625, 1626, 1627, 1628, 1629, 1630, 1631, 1632) in one magnet 162 increases, the number of physical magnets 162 in the rotor 160 decreases. For example, when the number of the polar regions 1622 and 1623 in one magnet 162 is 1, the number of physical magnets 162 of the rotor 160 are needed to be 48, when the number of the polar regions 1624 and 1625 in one magnet 162 is 2, the number of physical magnets 162 of the rotor 160 are needed to be 24, when the number of the polar regions 1626, 1627, and 1628 in one magnet 162 is 3, the number of physical magnets 162 of the rotor 160 are needed to be 16, when the number of the polar regions 1629, 1630, 1631, and 1632 in one magnet 162 is 4, the number of physical magnets 162 of the rotor 160 are needed to be 12, and when the number of the polar regions in one magnet 162 is 6, the number of physical magnets 162 of the rotor 160 are needed to be 8.

As the number of physical magnets 162 of the rotor 160 increases, the number of operations required to attach the magnets 162 to the inside of the rotor core 164 increases, and thus the operation cost increases. In other words, as the number of polar regions (1622, 1623, 1624, 1625, 1626, 1627, 1628, 1629, 1630, 1631, 1632) in one magnet 162 decreases, the manufacturing cost of the rotor 160 increases.

Referring to FIG. 17, it can be seen that the material cost ratio of the motors 150 and 160 to the polar anisotropy coefficient (X) of the magnet 162. The material cost of the motors 150 and 160 may be understood to include the material cost of the stator unit described in FIG. 15 and the manufacturing cost of the rotor 160 described in FIG. 16.

Based on 100% material cost of the motors 150 and 160 in FIG. 17, it can be seen that when the number of the polar regions 1622 and 1623 in one magnet 162 is 1, the polar anisotropy coefficient (X) is 6, when the number of the polar regions 1624 and 1625 is 2, the polar anisotropy coefficient (X) is 4.5, when the number of the polar regions 1626, 1627, and 1628 is 3, the polar anisotropy coefficient (X) is 3.5, and when the number of the polar regions 1629, 1630, 1631, and 1632 is 4, the polar anisotropy coefficient (X) is 2.5.

It can be seen that the material cost of the motors 150 and 160 is reduced by less than 100% when the number of the at least one polar region 1622 and 1623 is 1, the polar anisotropy coefficient (X) exceeds 6, when the number of the at least one polar region 1624 and 1625 is 2, the polar anisotropy coefficient (X) exceeds 4.5, when the number of the at least one polar region 1626, 1627, and 1628 is 3, the polar anisotropy coefficient (X) exceeds 3.5, and when the number of the at least one polar region 1629, 1630, 1631, an 1632 is 4, the polar anisotropy coefficient (X) exceeds 2.5. This means the lowest threshold for setting the polar anisotropy coefficient (X) within the limited material cost of the motors 150 and 160.

Therefore, referring to FIG. 18, considering the limited material cost of the motors 150 and 160 without occurring of cracks in the magnet 162, designing that when the number of the at least one polar region 1622 and 1623 is 1, the polar anisotropy coefficient (X) is between 6 and 7.5, when the number of the at least one polar region 1624 and 1625 is 2, the polar anisotropy coefficient (X) is between 4.5 and 6, when the number of the at least one polar region 1626, 1627, and 1628 is 3, the polar anisotropy coefficient (X) is between 3.5 and 4.5, and when the number of the at least one polar region 1629, 1630, 1631, and 1632 is 4, the polar anisotropy coefficient (X) is between 2.5 and 3.5, can be said to be the orientation of the magnet 162 with the most optimal polar anisotropy coefficient (X).

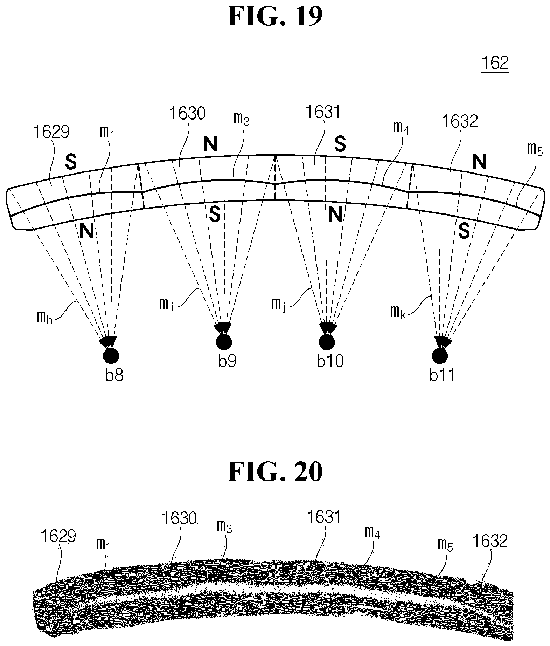

FIGS. 19 and 20 are diagrams showing a plurality of magnetic center lines of a magnet according to an embodiment of the present disclosure.

Referring to FIG. 19, a plurality of polar regions 1629, 1630, 1631, and 1632 of the magnet 162 may have a plurality of magnetic center lines (m1, m3, m4, and m5). The shapes of the plurality of magnetic center lines (m1, m3, m4, and m5) may be symmetrical to each other. For example, a radius of curvature of each of the plurality of magnetic center lines (m1, m3, m4, and m5) may be the same, and a circumferential length of each of the plurality of magnetic center lines (m1, m3, m4, and m5) may be the same. Through this, an output of the motors 150 and 160 can be increased and vibration generation and noise can be prevented.

Referring to FIG. 20, in the substantially manufactured magnet 162, the shapes of the plurality of magnetic center lines (m1, m3, m4, and m5) of the plurality of polar regions (1629, 1630, 1631, and 1632) may be formed asymmetrically. Specifically, the shapes of the plurality of magnetic center lines (m1, m3, m4, and m5) are formed asymmetrically due to the magnetic division region between the polar regions (1629, 1630, 1631, and 1632) and the physical division region at both ends of the magnet 162.

For example, a radius of curvature of a first magnetic center line m1 of an eighth polar region 1629 may be different from a radius of curvature of a second magnetic center line m3 of a ninth pole region 1630, and a radius of curvature of a third magnetic center line m4 of a tenth polar region 1631 may be different. Specifically, the radius of curvature on one side (left) of the first magnetic center line m1 of the eighth pole region 1629 may be different from the radius of curvature on the other side (right). Additionally, a circumferential length of the first magnetic center line m1 of the eighth polar region 1629 may be different from a circumferential length of the second magnetic center line m3 of the ninth polar region 1630, and a circumferential length of the third magnetic center line m4 of the tenth polar region 1631.

As another example, a radius of curvature of a fourth magnetic center line (m5) of an 11th polar region 1632 may be different from the radius of curvature of the second magnetic center line m3 of the ninth polar region 1630, and the radius of curvature of the third magnetic center line m4 of the tenth pole area 1631. Specifically, the radius of curvature on one side (left side) of the 11th polar region 1632 may be different from the radius of curvature on the other side (right side). Additionally, a circumferential length of the fourth magnetic center line m5 of the 11th polar region 1632 may be different from the circumferential length of the second magnetic center line m3 of the ninth polar region 1630, and the circumferential length of the third magnetic center line m4 of the tenth polar region 1631.

In this case, the output of the motors 150 and 160 may be reduced, and the vibration and noise may occur.

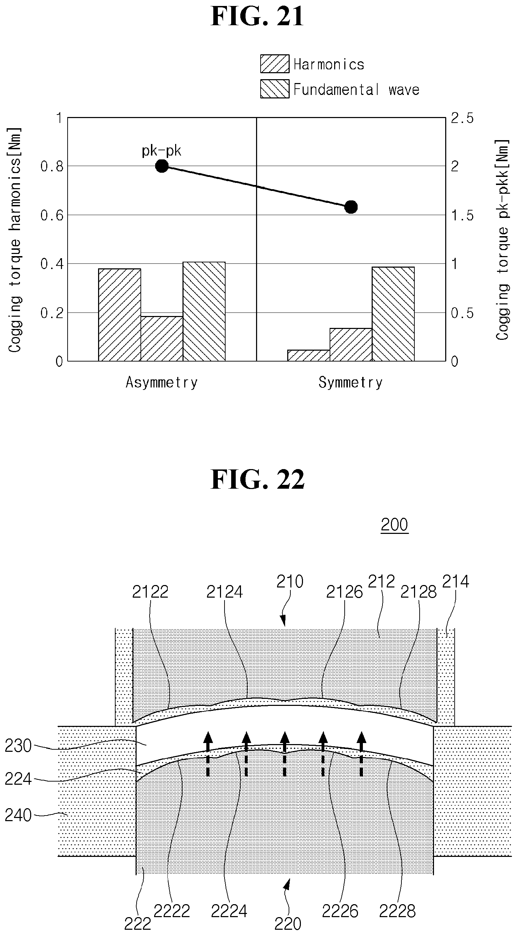

FIG. 21 is a graph showing a cogging torque of a motor depending on relationship between a plurality of magnetic center lines of a magnet according to an embodiment of the present disclosure.

Referring to FIG. 21, when the shapes of the plurality of magnetic center lines (m1, m3, m4, and m5) of the plurality of polar regions (1629, 1630, 1631, and 1632) of the magnet 162 are symmetric, it can be seen that the cogging torque harmonics of the motors 150 and 160 and the cogging torque pk-pk of the motors 150 and 160 are reduced compared to the case where the shapes of the plurality of magnetic center lines (m1, m3, m4, and m5) of the plurality of polar regions (1629, 1630, 1631, and 1632) of the magnet 162 are asymmetric. That is, when the shapes of the plurality of magnetic center lines (m1, m3, m4, and m5) of the plurality of polar regions (1629, 1630, 1631, and 1632) of the magnet 162 are symmetric, the output of the motors 150 and 160 may increase and the vibration and noise generation can be reduced due to a reduction in cogging torque. Here, the cogging torque refers to a force that prevents the rotor 160 from rotating when the rotor 160 is about to rotate, and it may be generated by a force acting between the magnet 162 of the rotor 160 and the stator unit of the stator 150.

In FIGS. 19 to 21, the case where there are four plurality of polar regions is described as an example, but it can also be applied when there are two or more polar regions.

FIG. 22 is a cross-sectional view of a magnet orientation device and a magnet raw material according to an embodiment of the present disclosure.

Referring to FIG. 22, the magnet orientation device 200 according to an embodiment of the present disclosure may include an upper plate 210, a lower plate 220, and a die 240, but additional configurations are not excluded. The magnet orientation device 200 can produce a permanent magnet 162 through a magnetization process in which an electron array of the magnet raw material 230 disposed inside is oriented in a certain direction and magnetically polarized by applying an external magnetic field.

The upper plate 210 may be disposed on the magnet raw material 230. The magnet raw material 230 may be formed into an arc shape that is convex upward. In this case, a lower surface of the upper plate 210 may be formed to be concave upward corresponding to an upper surface of the magnet raw material 230.

The upper plate 210 may include a first magnetic region 212 and a first non-magnetic region 214 surrounding the first magnetic region 212.

A lower surface of the first magnetic region 212 may be formed to be concave upward overall. The lower surface of the first magnetic region 212 may protrude downward from the center to both sides. The lower surface of the first magnetic region 212 may include a plurality of grooves 2122, 2124, 2126, and 2128 formed to be concave upward. Each of the plurality of grooves 2122, 2124, 2126, and 2128 may be formed as a curve.

A lower surface of the first non-magnetic region 214 may be formed in a shape corresponding to the upper surface of the magnet raw material 230. The lower surface of the first non-magnetic region 214 may be formed to be concave upward. The lower surface of the first non-magnetic region 214 may protrude downward from the center to the both sides.

The lower plate 220 may be disposed under the magnet raw material 230. An upper surface of the lower plate 220 may be formed to be convex upward corresponding to a lower surface of the magnet raw material 230.

The lower plate 220 may include a second magnetic region 222 and a second non-magnetic region 224 surrounding the second magnetic region 222.

An upper surface of the second magnetic region 222 may be formed to be convex upward overall. The upper surface of the second magnetic region 222 may protrude upward from both sides to the center. The upper surface of the second magnetic region 222 may include a plurality of protrusions 2222, 2224, 2226, and 2228 formed to be convex upward. Each of the plurality of protrusions 2222, 2224, 2226, and 2228 may be formed as a curve.

An upper surface of the second non-magnetic region 224 may be formed in a shape corresponding to the lower surface of the magnet raw material 230. The upper surface of the second non-magnetic region 224 may be formed to be convex upward. The upper surface of the second non-magnetic region 224 may protrude upward from the both sides to the center.

The die 240 may be disposed on both sides of the magnet raw material 230 to support the magnet raw material 230. A lower surface of the upper plate 210 may be disposed on an upper surface of the die 240, and an outer surface of the lower plate 220 may be disposed on an inner surface of the die 240. Alternatively, the upper surface of the lower plate 220 may be disposed on a lower surface of the die 240, and an outer surface of the upper plate 210 may be disposed on the inner surface of the die 240.

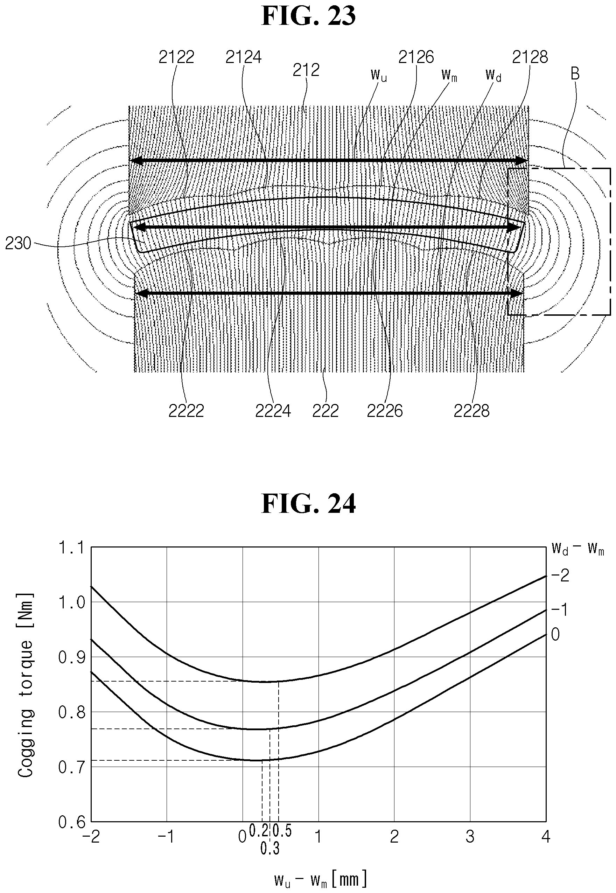

FIG. 23 is a diagram showing magnetic field analysis of a magnetic region and a magnet raw material of a magnet orientation device according to an embodiment of the present disclosure.

Referring to FIG. 23, it can be seen that a magnetic field is formed between the magnetic regions 212 and 222 and the magnet raw material 230 of the magnet orientation device 200. In this case, the magnetic flux is bent in a region B on both sides of the magnet raw material 230 due to the fringing effect. This fringe effect is influenced by a horizontal length (Wu) of the first magnetic region 212, a horizontal length (Wd) of the second magnetic region 222, and a horizontal length (Wm) of the magnet raw material 230. Using this, the magnetic center lines (m1, m3, m4, m5) of the plurality of polar regions (1629, 1630, 1631, 1632) of the magnet 162 may be formed symmetrically.

The horizontal length Wu of the first magnetic region 212 may be interpreted to mean the largest length of the first magnetic region 212 in the horizontal direction, the horizontal length Wm of the magnet raw material 230 may be interpreted to mean the largest length of the magnet raw material 230 in the horizontal direction, and the horizontal length Wd of the second magnetic region 222 may be interpreted to mean the largest length of the second magnetic region 222 in the horizontal direction.

FIG. 24 is a graph showing a cogging torque of a motor depending on relationship between horizontal lengths of an upper plate, a lower plate, and a magnet raw material of a magnet orientation device according to an embodiment of the present disclosure.

Referring to FIG. 24, it can be seen that the cogging torque of the motors 150 and 160 is reduced as the difference between the horizontal length (Wm) of the magnet raw material 230 and the horizontal length (Wd) of the second magnetic region 222 approaches 0. In addition, although not shown, when the horizontal length (Wd) of the second magnetic region 222 is greater than the horizontal length (Wm) of the magnet raw material 230, the cogging torque increases. That is, when a difference between the horizontal length (Wm) of the magnet raw material 230 and the horizontal length (Wd) of the second magnetic material region 222 is equal to or greater than 0 and equal to or less than 2 mm, it can be seen that the cogging torque of the motors 150 and 160 is reduced. Preferably, it can be seen that the cogging torque is reduced when the horizontal length (Wm) of the magnet raw material 230 and the horizontal length (Wd) of the second magnetic region 222 are the same.

That is, the horizontal length (Wd) of the second magnetic region 222 may be equal to or less than the horizontal length (Wm) of the magnet raw material 230. The difference between the horizontal length (Wm) of the magnet raw material 230 and the horizontal length (Wd) of the second magnetic region 222 may be 0 or more and 2 mm or less. Preferably, the horizontal length (Wd) of the second magnetic region 222 may be equal to the horizontal length (Wm) of the magnet raw material 230.

Also, referring to FIG. 24, when the horizontal length (Wu) of the first magnetic region 212 is greater than the horizontal length (Wm) of the magnet raw material 230, it can be seen that the cogging torque of the motors 150 and 160 is reduced. Preferably, the difference between the horizontal length (Wu) of the first magnetic region 212 and the horizontal length (Wm) of the magnet raw material 230 is 0 or more and 1 mm or less, it can be seen that the cogging torque of the motors 150 and 160 is reduced. More preferably, the difference between the horizontal length (Wu) of the first magnetic region 212 and the horizontal length (Wm) of the magnet raw material 230 is 0.2 mm or more and 0.5 mm or less, it can be seen that the cogging torque of the motors 150 and 160 is minimized.

That is, the horizontal length (Wu) of the first magnetic region 212 may be greater than the horizontal length (Wm) of the magnet raw material 230. The difference between the horizontal length (Wu) of the first magnetic region 212 and the horizontal length (Wm) of the magnet raw material 230 may be 0.2 mm or more and 0.5 mm or less.

Through this, the magnetic center lines (m1, m3, m4, and m5) of the plurality of polar regions (1629, 1630, 1631, and 1632) of the magnet 162 are formed symmetrically, so that the output of the motors 150 and 160 can be increased, and vibration and noise generation can be reduced.

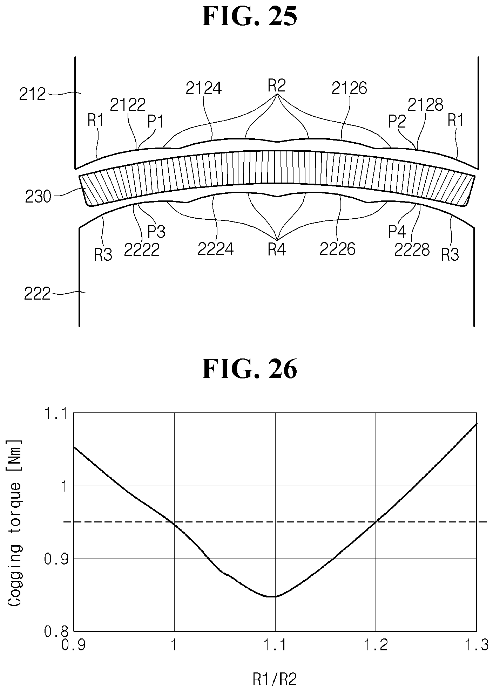

FIG. 25 is a cross-sectional view of a magnetic region and a magnet raw material of a magnet orientation device according to an embodiment of the present disclosure.

Referring to FIG. 25, the plurality of grooves 2122, 2124, 2126, and 2128 of the upper plate 212 may include a first groove 2122, a second groove 2124, and a third groove 2126, and a fourth groove 2128.

The shape of the first groove 2122 may be different from the shape of the second groove 2124 and the third groove 2126. The shape of the fourth groove 2128 may be different from the shape of the second groove 2124 and the third groove 2126. That is, the shape of the groove adjacent to both sides of the first magnetic material 212 may be formed differently from the shape of other grooves. Through this, the shapes of the magnetic center lines (m1, m3, m4, and m5) of the plurality of polar regions (1629, 1630, 1631, and 1632) of the magnet 162 can be formed to be symmetrical to each other.

Specifically, one side (left) region based on P1 of the first groove 2122 may have a first radius of curvature R1, and the other (right) region based on P1 of the first groove 2122 may have a second radius of curvature R2. The second groove 2124 and the third groove 2126 may have the second radius of curvature R2. One side (left) region based on P2 of the fourth groove 2128 may have the second radius of curvature R2, and the other (right) region based on P2 of the fourth groove 2128 may have the first radius of curvature R1.

Here, the first groove 2122 and the fourth groove 2128 may refer to grooves adjacent to both sides of the first magnetic material 212, and the second groove 2124 and the third groove 2126 may refer to grooves other than the grooves adjacent to both sides of the first magnetic material 212.

In addition, it can be interpreted that one side (left) region of the first groove 2122 and the other side (right) region of the fourth groove 2128 mean a region adjacent to both sides of the first magnetic material 2122 among the grooves adj acent to both sides of the first magnetic material 212, and the other (right) region of the first groove 2122 and the one side (left) region of the fourth groove 2128 mean a region other than the region adjacent to both sides of the first magnetic material 212 among the grooves adjacent to both sides of the first magnetic material 212.

In one embodiment of the present disclosure, the number of the plurality of grooves 2122, 2124, 2126, and 2128 is described as four to form four polar regions as an example, but the number of the plurality of grooves 2122, 2124, 2126, and 2128 may vary depending on the number of polar regions of the magnet 162.

The plurality of protrusions 2222, 2224, 2226, and 2228 of the lower plate 222 may include a first protrusion 2222, a second protrusion 2224, a third protrusion 2226, and a fourth protrusion 2228.

In this case, the shape of the first protrusion 2222 may be different from the shape of the second protrusion 2224 and the third protrusion 2226. The shape of the fourth protrusion 2228 may be different from the shape of the second protrusion 2224 and the third protrusion 2226. That is, the shape of the protrusions adjacent to both sides of the second magnetic material 222 may be formed differently from the shapes of other protrusions. Through this, the shapes of the magnetic center lines (m1, m3, m4, and m5) of the plurality of polar regions (1629, 1630, 1631, and 1632) of the magnet 162 can be formed to be symmetrical to each other.

Specifically, one side (left) region based on P3 of the first protrusion 2222 has a third radius of curvature R3, and the other side (right) region based on P3 of the first protrusion 2222 has a fourth radius of curvature R4. The second protrusion 2224 and the third protrusion 2226 may have the fourth radius of curvature R4. One side (left) region based on P3 of the fourth protrusion 2228 may have the fourth radius of curvature R4, and the other side (right) region based on P4 of the fourth protrusion 2228 may have the third radius of curvature R3.

Here, the first protrusion 2222 and the fourth protrusion 2228 may refer to protrusions adjacent to both sides of the second magnetic material 222, and the second protrusion 2224 and the third protrusion 2226 may refer to protrusions other than the protrusions adjacent to both sides of the second magnetic material 222.

In addition, it can be interpreted that one side (left) region of the first protrusion 2222 and the other side (right) region of the fourth protrusion 2228 mean a region adjacent to both sides of the second magnetic material 2222 among the protrusions adjacent to both sides of the second magnetic material 222, and the other (right) region of the first protrusion 2222 and the one side (left) region of the fourth protrusion 2228 mean a region other than the region adjacent to both sides of the first magnetic material 222 among the protrusions adjacent to both sides of the second magnetic material 222.

In one embodiment of the present disclosure, the number of the plurality of protrusions 2222, 2224, 2226, and 2228 is described as four to form four polar regions as an example, but the number of protrusions 2222, 2224, 2226, and 2228 may vary depending on the number of polar regions of the magnet 162.

FIG. 26 is a graph showing a cogging torque of a motor depending on relationship between radii of curvature of a plurality of grooves of an upper plate of a magnet orientation device according to an embodiment of the present disclosure.

Referring to FIG. 26, when the size of the first curvature (R1) is greater than the second curvature (R2), it can be seen that the cogging torque of the motors 150 and 160 is reduced compared to the case where the size of the existing first curvature (R1) and the size of the second curvature (R2) are the same. Specifically, when a value obtained by dividing the first curvature (R1) by the second curvature (R2) is between 1 and 1.2, it can be seen that the cogging torque of the motors 150 and 160 is reduced compared to before.

That is, the size of the first curvature (R1) may be greater than the size of the second curvature (R2). Preferably, the value obtained by dividing the first curvature (R1) by the second curvature (R2) may be between 1 and 1.2. Through this, the magnetic center lines (m1, m3, m4, and m5) of the magnet 162 having a plurality of polar regions (1629, 1630, 1631, and 1632) are oriented symmetrically, so that the output of the motors 150 and 160 can be improved and the noise can be reduced.

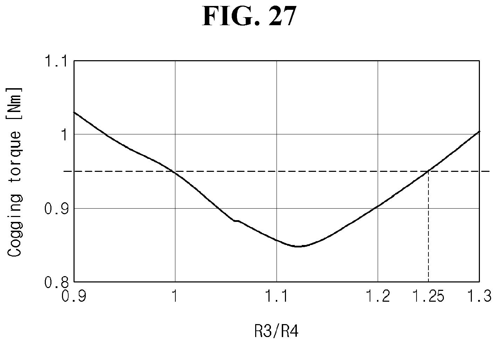

FIG. 27 is a graph showing a cogging torque of a motor depending on relationship between radii of curvature of a plurality of protrusions of a lower plate of a magnet orientation device according to an embodiment of the present disclosure.

Referring to FIG. 27, when the size of the third curvature (R3) is greater than the fourth curvature (R4), it can be seen that the cogging torque of the motors 150 and 160 is reduced compared to the case where the size of the existing third curvature (R3) and the size of the fourth curvature (R4) are the same. Specifically, when a value obtained by dividing the third curvature (R3) by the fourth curvature (R4) is between 1 and 1.25, it can be seen that the cogging torque of the motors 150 and 160 is reduced compared to before.

That is, the size of the third curvature (R3) may be greater than the size of the fourth curvature (R4). Preferably, the value obtained by dividing the third curvature (R3) by the fourth curvature (R4) may be between 1 and 1.25. Through this, the magnetic center lines (m1, m3, m4, and m5) of the magnet 162 having a plurality of polar regions (1629, 1630, 1631, and 1632) are oriented symmetrically, so that the output of the motors 150 and 160 can be improved and the noise can be reduced.

Some or other embodiments of the present disclosure described above are not exclusive or distinct from one another. Some or other embodiments of the present disclosure described above may be used in combination or combined with each configuration or function.

For example, it means that configuration A described in specific embodiments and/or drawings and configuration B described in other embodiments and/or drawings may be combined. In other words, even when the combination between the components is not described directly, it means that the combination is possible except when it is described as not possible to combine.

The above detailed description should not be construed as limiting in all respects and should be considered as illustrative. The scope of the present disclosure should be determined by reasonable interpretation of the appended claims, and all changes within the scope of the present disclosure are included in the scope of the present disclosure.

## Claims

1.  A magnet orientation device comprising:

    an upper plate (210) disposed on a magnet raw material (230) formed into an arc shape that is convex upward;
    a lower plate (220) disposed under the magnet raw material (230); and
    dies (240) disposed on both sides of the magnet raw material (230),
    wherein the upper plate (210) includes a first magnetic region (212) and a first non-magnetic region (214) surrounding the first magnetic region (212),
    wherein the lower plate (220) includes a second magnetic region (222) and a second non-magnetic region (224) surrounding the second magnetic region (222),
    wherein a lower surface of the first magnetic region (212) includes a plurality of grooves (2122, 2124, 2126, 2128) formed concave upward,
    wherein an upper surface of the second magnetic region (222) includes a plurality of protrusions (2222, 2224, 2226, 2228) formed convex upward, and
    wherein a horizontal length (Wu) of the first magnetic region (212) is greater than a horizontal length (Wm) of the magnet raw material (230), and a horizontal length (Wd) of the second magnetic region (222) is equal to or less than the horizontal length (Wm) of the magnet raw material (230).

2.  The device of claim 1, wherein a difference between the horizontal length (Wm) of the magnet raw material (230) and the horizontal length (Wd) of the second magnetic material region (222) is 0 or more and 2 mm or less.

3.  The device of claim 1 or 2, wherein the horizontal length (Wm) of the magnet raw material (230) and the horizontal length (Wd) of the second magnetic material (222) region are the same.

4.  The device of any one of claims 1 to 3, wherein a difference between the horizontal length (Wu) of the first magnetic region (212) and the horizontal length of (Wm) the magnet raw material (230) is 0.2 mm or more and 0.5 mm or less.

5.  The device of any one of claims 1 to 4, wherein the first non-magnetic region (214) protrudes downward from a center to both sides.

6.  The device of any one of claims 1 to 5, wherein the second non-magnetic region (224) protrudes upward from the both sides to the center.

7.  The device of any one of claims 1 to 6, wherein each of the plurality of grooves (2122, 2124, 2126, 2128) is formed as a curve.

8.  The device of any one of claims 1 to 7, wherein each of the plurality of protrusions (2222, 2224, 2226, 2228) is formed as a curve.

9.  The device of any one of claims 1 to 8, wherein a lower surface of the first non-magnetic region (214) is formed in a shape corresponding to an upper surface of the magnet raw material (230).

10. The device of claim 9, wherein the lower surface of the first non-magnetic region (214) is formed to be concaved upwards.

11. The device of any one of claims 1 to 10, wherein an upper surface of the second non-magnetic region (224) is formed in a shape corresponding to a lower surface of the magnet raw material (230).

# FIG. 1

# FIG. 2

# FIG. 3

100

# FIG. 4

100

110

120

130

140

170

180

150

162

160

# FIG. 5

100

110

120

130

140

150

162

160

# FIG. 6

160

162

164

# FIG. 7

162

1622    1623

S    N

N    S

$m_a$    $m_b$

$r_b$

b1    b2

# FIG. 8

162

# FIG. 9

162

# FIG. 10

162

# FIG. 11

# FIG. 12

# FIG. 13

# FIG. 14

## FIG. 15

## FIG. 16

# FIG. 17

# FIG. 18

# FIG. 19

# FIG. 20

# FIG. 21

# FIG. 22

# FIG. 23

# FIG. 24

# FIG. 25

# FIG. 26

# FIG. 27

Europäisches
Patentamt

European
Patent Office

Office européen
des brevets

# EUROPEAN SEARCH REPORT

**Application Number**

EP 24 16 2852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/033202 A1 (TDK CORP [JP]; MIYAGISHIMA KAZUHIKO [JP]; NIHASHI SADAO [JP]) 15 March 2012 (2012-03-15)<br>* abstract * *<br>* paragraphs [0014], [0020]; figures 1-3 *<br>* paragraphs [0040] - [0050]; figures 13-15 * | 1-11 | INV.<br>H01F41/02<br><br>ADD.<br>H02K21/12 |

**TECHNICAL FIELDS SEARCHED (IPC)**

H01F

The present search report has been drawn up for all claims

| Place of search | Date of completion of the search | Examiner |
|---|---|---|
| Munich | 30 July 2024 | Reder, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 2852

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | Publication date | Patent family member(s) | | Publication date |
|---|---|---|---|---|
| WO 2012033202 A1 | 15-03-2012 | CN | 103098354 A | 08-05-2013 |
| | | JP | 5870567 B2 | 01-03-2016 |
| | | JP | 2012080097 A | 19-04-2012 |
| | | WO | 2012033202 A1 | 15-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200089604